# EUROPÄISCHE PATENTSCHRIFT

(11) **EP 2 404 078 B1**
(45) Veröffentlichungstag und Bekanntmachung des Hinweises auf die Patenterteilung: **26.02.2014**
(21) Anmeldenummer: 10709468.2
(22) Anmeldetag: 08.03.2010
(51) Int. Cl.: F16F 9/58

(54) **DÄMPFUNGSSYSTEM ZUR ANSCHLAGSDÄMPFUNG**
DAMPING SYSTEM FOR IMPACT DAMPING
SYSTÈME D'AMORTISSEMENT POUR AMORTISSEMENT DE BUTÉE

(30) Priorität: 06.03.2009 DE 102009013152
(43) Veröffentlichungstag der Anmeldung: 11.01.2012
(73) Patentinhaber: Schunk GMBH & CO.KG Spann-Und Greiftechnik, 74348 Lauffen am Neckar (DE)
(72) Erfinder: LOHMÜLLER, Sebastian, 74223 Flein (DE); SCHULZ, Stefan, 74336 Brackenheim-Stockheim (DE)
(74) Vertreter: DREISS Patentanwälte PartG mbB
(86) Internationale Anmeldenummer: PCT/EP2010/052920
(87) Internationale Veröffentlichungsnummer: WO 2010/100286

(56) Entgegenhaltungen:
- EP-A1- 0 161 147
- EP-A1- 0 915 196
- EP-A1- 1 947 362
- DE-A1- 2 820 467
- DE-B3- 10 344 102
- DE-U- 7 308 193
- GB-A- 2 027 517
- US-A- 3 171 643

## Beschreibung

Die Erfindung betrifft ein Dämpfungssystem zur Anschlagsdämpfung mit einem längs einer Dämpfungsrichtung bewegbaren Körper, dessen Bewegung vor Erreichen einer Endlage gedämpft wird, wobei durch Bewegen des Körpers aus seiner Anfangslage in Dämpfungsrichtung über einen ersten Weg ein Stoßelement beaufschlagt und durch weiteres Bewegen über einen zweiten Weg ein Elastomerelement verformt wird. Derartige Dämpfungssysteme werden auch als Industriestoßdämpfer bezeichnet, zur Abgrenzung zu Fahrzeugstoßdämpfern, welche in erster Linie Schwingungen und nicht den Anschlag eines entlang einer Achse verschiebbar gelagerten Körpers dämpfen.

Aus der DE 7308193 U1 ist ein Federbein bekannt, bei dem eine Schraubenfeder und eine Dämpfungsfeder aus Gummi, gummiähnlichem Werkstoff oder aus Elastomer funktional parallel geschaltet sind. Die Dämpfungsfeder ist dabei als Elastomer-Hohlkörper, insbesondere faltenbalgartig oder als Zylindermantel mit Biegeeinschnitten und/oder Materialverdichtungsstellen, ausgebildet.

In der DE 103 44 102 B3 ist ein Federträger beschrieben, bei dem eine Zusatzfeder aus einem elastischen Werkstoff zumindest abschnittsweise an einer Tragfeder anliegt. Die Zusatzfeder ist dabei mit einem Schraubenprofil entsprechend der Steigung der als Schraubenfeder ausgebildeten Tragfeder versehen.

Aus der EP 0 161 147 A1 ist Stoßdämpferzylinder eines Kraftfahrzeugs bekannt, bei dem ein Elastomeranschlag in einem Zylinder vorgesehen ist. Aus der EP 1 947 362 A1 ist ein hydraulischer Schockabsorber bekannt, bei dem eine Feder aus synthetischem Kunststoff zum Einsatz kommt, deren Federkonstante während ihrer Kontraktion zunimmt. Aus der US 3 171 643 A ist ein mehrstufiges pneumatisches Federelement bekannt, bei dem elastische Anschlagstopper vorhanden sind. Aus der GB 2 027 517 A ist ein hydraulischer Dämpfer bekannt, bei dem ein dichtender Gummianschlag vorgesehen ist.

Die beschriebenen Vorrichtungen finden beispielsweise in Fahrzeugstoßdämpfern oder Sattelstützen Verwendung, wobei sie insbesondere die Dämpfung von Schwingungen bewirken sollen. Ein regelmäßiger Nachteil beim Stand der Technik ist eine starke Ermüdung der Dämpfungsfeder im wiederholten Dämpfungsbetrieb, was zur Verringerung der Pufferwirkung führen kann.

Der Erfindung liegt die Aufgabe zugrunde, ein Dämpfungssystem mit einem hydraulischen Dämpfer zur Anschlagsdämpfung mit einfacher, kostengünstiger Bauart bereitzustellen, das robust gegen Materialermüdung des Elastomerelements ist, klein baut und funktionssicher arbeitet.

Diese Aufgabe wird durch ein Dämpfungssystem zur Anschlagsdämpfung mit den Merkmalen des Anspruchs 1 gelöst. Dieses weist demnach einen längs einer Dämpfungsrichtung bewegbaren Körper auf, dessen Bewegung vor Erreichen einer Endlage gedämpft wird. Dabei wird durch Bewegen des Körpers aus seiner Anfangslage in Dämpfungsrichtung über einen ersten Weg zunächst ein Stoßelement beaufschlagt und durch weiteres Bewegen, über den ersten Weg hinaus, über einen zweiten Weg ein Elastomerelement verformt. Als Stoßelement werden hierbei Mittel oder Einheiten bezeichnet, welche sich bei Beaufschlagung federnd verhalten, elastisch verformbar sind oder dämpfend wirken. Das Stoßelement kann die aufgenommene Energie zumindest teilweise speichern, und/oder in eine andere Form, z.B. Wärme, umwandeln. Die Beaufschlagung des Stoßelements kann direkt mit Beginn der Bewegung des Körpers aus seiner Anfangslage einsetzten, oder auch nach Zurücklegen eines gewissen Weges erfolgen. Das Stoßelement und das Elastomerelement werden daher wegabhängig funktional parallel geschaltet, indem nach der Wirkung des Stoßelements eine weitere Dämpfung durch Verformung des Elastomerelements erzielt wird. Erfindungsgemäß ist eine formkonstante Zwangsführung vorgesehen, in welcher das Elastomerelement derart angeordnet ist, dass eine Verformung des Elastomerelements in radialer Richtung während des zweiten Wegs zumindest abschnittsweise unterbunden wird. Die Zwangsführung wird entweder vom

Dämpfergrundteil des hydraulischen Dämpfers und vom Gehäuse, oder von der Dämpferstange des hydraulischen Dämpfers und vom Gehäuse gebildet, wobei Elastomerelement als Ringelement ausgebildet ist. Da die Zwangsführung formkonstant ausgebildet ist, wird sie bei der Bewegung des Körpers nicht verformt. Insbesondere ist die Zwangsführung vom Stoßelement separat ausgebildet und/oder in radialer Richtung umfänglich geschlossen, beispielsweise hülsenartig ausgebildet sein.

Durch die Zwangsführung wird ein seitliches Ausbauchen oder Ausknicken des Elastomerelements verhindert. Bei den bisher aus dem Stand der Technik bekannten Dämpfungssystemen ist hingegen eine Verformung des Elastomers in radialer Richtung möglich und in vielen Fällen aufgrund der Ausbildung des Elastomerelements als Faltensack oder Zylindermantel mit Materialverdichtungsstellen sogar gewollt. Dies führt zu einer erhöhten inneren Beanspruchung und insbesondere an den Knickbeziehungsweise Biegestellen zur Materialermüdung des Elastomers. Bei dem erfindungsgemäßen Dämpfungssystem wird dies durch die Zwangsführung weitgehend vermieden, wobei die Zwangsführung insbesondere auch während der Verformung des Elastomerelements ihre konstante Form beibehält und so die Materialbelastung vermindert. Darüber hinaus wird durch die funktionale Parallelschaltung des Elastomerelements zum Stoßelement nach dem ersten Weg eine progressive Kraft-Wegcharakteristik erreicht. Eine hohe Energie kann zunächst zu Beginn des Dämpfungsvorgangs entlang des ersten Wegs aufgenommen bzw. umgesetzt werden. Die wirksame Geschwindigkeit beim Verformen des Elastomers während des zweiten Weges ist dadurch erheblich verringert. Ein Rückschwingen beziehungsweise Abprallen vom Elastomer wird damit weitgehend verhindert, da das Elastizitätsmodul typischer Elastomere gerade für kleine Frequenzen einer Verformung geringe Werte aufweist. Mit dem beschriebenen Dämpfungssystem können folglich hohe Energien über einen kurzen Dämpfungsweg aufgenommen werden. Darüber hinaus besteht in radialer Richtung zur Dämpfungsrichtung wenig Platzbedarf für eine Ausbauchung oder ein Ausknicken des Elastomers, da dieses in radialer Richtung zwangsgeführt wird. Insgesamt ermöglicht die Erfindung eine sowohl in Dämpfungsrichtung als auch in radialer Richtung platzsparende Bauweise bei gleichzeitiger hoher Dämpfungsleistung. Dies wird mit vergleichsweise einfacher Anordnung weniger Bauteile erreicht. Dadurch ergibt sich ein funktionssicherer, robuster Aufbau und es ist beispielsweise ein Austausch von beschädigten Elastomerelementen komfortabel möglich. Die erfindungsgemäßen Dämpfungssysteme sollen insbesondere in Automatisierungskomponenten Verwendung finden, in welchen Bauteile beschleunigt und dann vor Erreichen einer Endlage bzw. vor Auftreffen an einen Anschlag abzubremsen sind.

Als bevorzugte Ausgestaltung ist vorgesehen, dass das Elastomerelement aus einem Elastomer-Werkstoff mit Gaseinschlüssen, insbesondere einem microcellularen Elastomer oder einem Elastomer-Schaum gebildet ist. Denkbar ist außerdem, dass das Elastomerelement aus einem Elastomer-Werkstoff mit inneren Hohlräumen gebildet ist. Diese Werkstoffe weisen aufgrund ihrer Beschaffenheit eine sehr hohe innere Dämpfungswirkung auf und sind vergleichsweise kompressibel. Solche Werkstoffe sind besonders für den beschriebenen Einsatz in einem Dämpfungssystem geeignet, da ein Abprallen und Rückschwingen des Körpers unterdrückt wird.

Eine vorteilhafte Weiterbildung der Erfindung ergibt sich dadurch, dass das Elastomerelement in der Zwangsführung derart angeordnet ist, dass es in der Anfangslage von den die Verformung in radialer Richtung unterbindenden Abschnitten der Zwangsführung beabstandet ist. Damit wird während des zweiten Weges in gewissem Maße eine Verformung des Elastomerelements in radialer Richtung zugelassen, bevor die Wirkung der Zwangsführung einsetzt. Diese kontrollierte anfängliche Verformungsmöglichkeit führt zu einem weniger starren Verhalten gegen eine Kraft in Dämpfungsrichtung und ist insbesondere dann vorteilhaft, wenn eine weiche Dämpfung erzielt werden soll.

Als weitere Ausgestaltung kann demgegenüber vorgesehen sein, dass das Elastomerelement in der Zwangsführung derart angeordnet ist, dass es in der Anfangslage an den die Verformung in radialer Richtung unterbindenden Abschnitten der Zwangsführung zumindest abschnittsweise und vorzugsweise vollumfänglich anliegt. Bei dieser Bauweise wird die innere Beanspruchung des Elastomerelements beim Dämpfungsvorgang besonders klein gehalten, da radiale Verformungen größtenteils vermieden werden. Typischerweise ergibt sich eine vergleichsweise härtere Federcharakteristik.

Als bevorzugte Ausgestaltung ist das Elastomerelement derart angeordnet, dass bei seiner Verformung die gesamte, dem Körper zugewandte Stirnseite des Elastomerelements mit Kraft beaufschlagt wird. Insbesondere ist eine gleichmäßige Verteilung der wirkenden Kraft über die dem Körper zugewandte Stirnseite des Elastomerelements vorteilhaft. Das Elastomerelement kann dabei direkt oder auch indirekt, unter Zwischenschaltung eines weiteren Bauteils, vom Körper beaufschlagt werden. Es kann hierzu beispielsweise eine stabile Druckplatte vorgesehen sein, die an der dem Körper zugewandte Stirnseite des Elastomerelements anliegt und auf die der Körper bei der Verformung des Elastomerelements wirkt. Als Ergebnis dieser Bausweise wird die innere Beanspruchung und damit die Materialermüdung des Elastomerelements weiter reduziert.

Das Elastomerelement ist vorzugsweise in der Zwangsführung und mit dieser im Gehäuse unbeweglich angeordnet und wird bei Bewegung des Körpers nicht mitbewegt. Andererseits ist auch denkbar, dass das Elastomerelement fest am Körper angeordnet ist und mit diesem in der Zwangsführung oder mit der Zwangsführung gemeinsam im Gehäuse bewegt wird.

Das Elastomerelement kann insbesondere so in der Zwangsführung angeordnet sein, dass es, abgesehen von der dem Körper zugewandten Stirnseite, in radialer und axialer Richtung vollumfänglich an der Zwangsführung anliegt. Wird dann die gesamte Stirnseite durch den Körper beaufschlagt, kann das Elastomerelement in keine Richtung ausweichen. Eine Verformung erfolgt also in erster Linie durch eine Kompression der im Elastomerelement enthaltenen Gaseinschlüsse und/oder Hohlräume.

Besonders vorteilhaft ist, wenn die Zwangsführung sich derart längs der Dämpfungsrichtung erstreckt, dass der Körper bei Bewegung längs der Dämpfungsrichtung durch die Zwangsführung geführt wird. Beispielsweise kann die Zwangsführung einen als Führungsstange oder Führungsröhre ausgebildeten Abschnitt aufweisen, welche den Körper koaxial führt. Dadurch wird vermieden, dass sich der Körper mit anderen Bauteilen des Dämpfungssystems, insbesondere mit Abschnitten der Zwangsführung, verkantet.

Besonders bevorzugt ist außerdem, wenn für das Stoßelement eine Führung längs der Dämpfungsrichtung vorgesehen ist und der Körper bei Bewegung längs der Dämpfungsrichtung durch die Führung geführt wird. Dadurch wird ein Verkanten des Körpers, insbesondere mit Teilen des Stoßelements, verhindert.

Bevorzugte Weiterbildungen der Erfindung sehen vor, dass das Stoßelement eine Schraubenfeder, eine hydraulische Feder oder eine Druckluftfeder umfasst. Insbesondere können auch gängige hydraulische Dämpfer Verwendung finden.

Das Elastomerelement ist vorteilhafterweise als ein Ringelement aus Elastomer ausgebildet. Solche Elastomerelemente können in einfacher, kostengünstiger Weise aus gängigen Elastomer Dämpfungsplatten ausgestanzt, ausgesägt, ausgeschnitten oder ausgebohrt werden. Die Ringelemente werden im erfindungsgemäßen Dämpfungssystem in einer entsprechend geformten Zwangsführung angeordnet. Für ein Ringelement ist die Zwangsführung dann vorteilhafterweise derart ausgebildet, dass sie eine Verformung in radialer Richtung sowohl nach innen, als auch nach außen zumindest abschnittsweise unterbindet. Die Zwangsführung hat in diesem Fall also eine doppelte Führungswirkung nach innen und außen. Dabei können nach radial innen und außen unterschiedliche Bauteile als Zwangsführung vorgesehen sein.

Vorteilhafterweise weist der Körper eine axiale Öffnung längs der Dämpfungsrichtung auf, in welcher das Stoßelement koaxial angeordnet ist und sich an der Stirnseite der Öffnung im Körper in Dämpfungsrichtung abstützt. Auf diese Weise wird eine kompakte, lateral stabile Bauweise ermöglicht. Ein Verkanten der verschiedenen Bauteile oder ein seitliches Verschieben wird verhindert.

Es ist andererseits denkbar, dass das Stoßelement koaxial um den Körper angeordnet ist und sich in Dämpfungsrichtung am Körper abstützt. Durch diese Bauform wird das Stoßelement gegen seitliches Ausweichen geführt und ein Verkanten der Bauteile verhindert.

Eine bevorzugte Ausgestaltung der Erfindung ergibt sich daraus, dass Einstellmittel zur Veränderung der Position des Elastomerelements entlang der Dämpfungsrichtung derart vorgesehen sind, dass der erste Weg bei Bewegung des Körpers in Dämpfungsrichtung einstellbar ist. Es ist außerdem denkbar, dass durch die Einstellmittel die Vorspannung des Stoßelements in der Anfangslage verändert wird. Beispielsweise kann ein Grundteil vorgesehen sein, das mittels einer Stellschraube längs der Dämpfungsrichtung axial positionsveränderbar ist und mit welchem das Elastomerelement und/oder die Führung verbunden ist. Durch die Einstellmittel kann die Kraft-Wegkennlinie des Dämpfungssystems verändert und für den jeweiligen Einsatzzweck optimal angepasst werden.

Bei einer bevorzugten Ausführungsform sind Körper, Stoßelement und Elastomerelement in einem Gehäuse angeordnet und der Körper wird entlang der Dämpfungsrichtung im Gehäuse geführt. Der Körper kann dabei das Gehäuse entgegen der Dämpfungsrichtung überragen, um die Aufnahme eines Kraftstoßes zu ermöglichen. Außerdem ist denkbar, dass der Körper in einem in Dämpfungsrichtung offenen Gehäuse eingelassen ist. Durch diese Ausführungsformen wird eine zusammenhängende, autark handhabbare Vorrichtung mit einem erfindungsgemäßen Dämpfungssystem bereitgestellt, die beispielsweise als Stoßdämpfer verwendet und verwertet werden kann.

Besonders bevorzugt ist dabei, dass die Zwangsführung für das Elastomerelement wenigstens teilweise durch das Gehäuse gebildet wird. Beispielsweise kann das Gehäuse die Zwangsführung gegen Verformung in radialer Außenrichtung bilden, wogegen die Zwangsführung in radialer Innenrichtung durch eine getrennt ausgebildete Elastomerführung bereitgestellt wird.

Ein erfindungsgemäßes Dämpfungssystem kann insbesondere in einer Schwenkeinheit zum Einsatz kommen, die außerdem eine aktiv ansteuerbare Antriebsvorrichtung zum Bewegen des Körpers längs der Dämpfungsrichtung umfasst. Die Antriebsvorrichtung kann dabei durch einen Druckraum gebildet werden, der zur Bewegung des Körpers beaufschlagt wird, oder durch einen Elektromotor. Die lineare Bewegung des Körpers wird beispielsweise über eine Zahnstange und ein Zahnrad in eine Drehbewegung umgesetzt und treibt so beispielsweise einen Schwenkarm an. Vor dem Erreichen der Endlage wird die Bewegung des Körpers wie oben beschrieben abgebremst bzw. gedämpft und so eine Anschlagsdämpfung für die Drehbewegung der Schwenkeinheit bereitgestellt.

Weitere Einzelheiten und vorteilhafte Ausgestaltungen der Erfindung sind der folgenden Beschreibung zu entnehmen, anhand derer die in den Figuren dargestellten Ausführungsformen der Erfindung näher beschrieben und erläutert sind.

Es zeigen:
Figur 1 einen Längsschnitt durch ein Dämpfungssystem zur Anschlagsdämpfung mit Schraubenfeder;
Figur 2 ein Dämpfungssystem in einer weiteren Ausführungsform mit Schraubenfeder als Längsschnitt;
Figur 3 ein erfindungsgemäßes Dämpfungssystem als Längsschnitt;
Figur 4 eine weitere Ausführungsform eines erfindungsgemäßen Dämpfungssystems mit einem skizzierten hydraulischen Stoßelement als Längsschnitt;
Figur 5 das Dämpfungssystem aus Figur 4 in einer schematischen Detaildarstellung;
Figur 6 einen Längsschnitt durch ein Dämpfungssystem mit positionsverstellbarem Elastomerelement und
Figur 7 eine weiteres Dämpfungssystem.

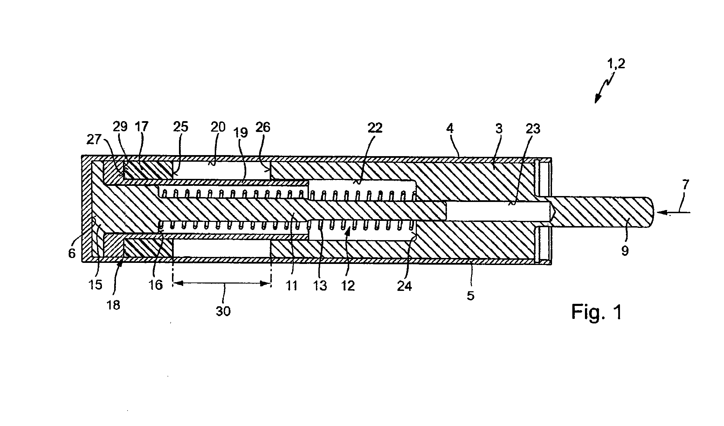

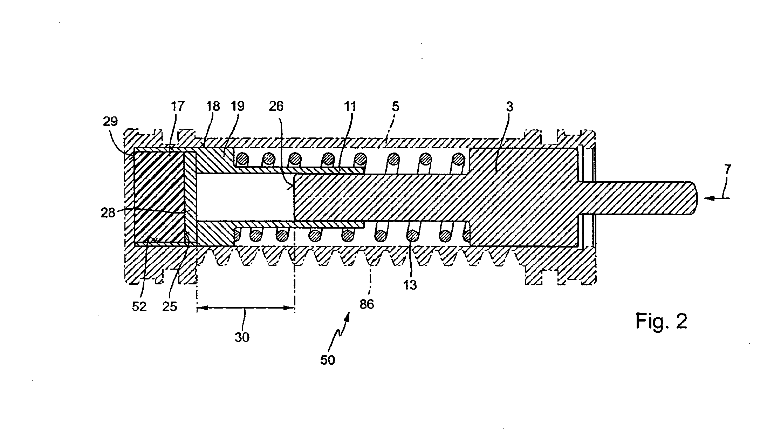

In den Figuren 1 und 2 ist zur Erläuterung des Erfindungsgedankens jeweils ein Dämpfungssystem mit Schraubenfeder dargestellt. Die Figur 1 zeigt ein Dämpfungssystem 2 mit einem als Dämpferrohr 4 ausgebildeten Gehäuse 5. Eine derartige Vorrichtung findet beispielsweise als Stoßdämpfer 1 Verwendung, wobei insbesondere eine Anschlagsdämpfung erreicht werden soll. Ein kolbenartiger Körper 3 wird entlang der Dämpfungsrichtung 7 im Dämpferrohr 4 geführt. Die mit dem Körper 3 einstückig verbundene Kolbenstange 9 überragt das Dämpferrohr 4 entgegen der Dämpfungsrichtung 7. In Figur 1 ist der Körper 3 in seiner Anfangslage dargestellt. Im Dämpferrohr 4 ist koaxial mit dem Körper 3 eine als Stange ausgeführte Führung 11 vorgesehen, um welche ein Stoßelement 12 koaxial angeordnet ist. Das Stoßelement 12 ist hierbei als eine Schraubenfeder 13 ausgebildet. Die Führung 11 ist mit der den Körper 3 abgewandten Bodenseite 6 des Gehäuses 5 fest verbunden. Die Führung 11 weist in dem der Bodenseite 6 zugewandten Bereich ein Fußteil 15 auf, welches eine in radialer Richtung nach innen zurückversetzte Anlageschulter 16 vorsieht. Die Schraubenfeder 13 stützt sich in Dämpfungsrichtung 7 an der Anlageschulter 16 ab, so dass eine auf die Schraubenfeder 13 längs der Dämpfungsrichtung 7 wirkende Kraft in das Gehäuse 5 abgeleitet werden kann. Das Fußteil 15 wird von einer hülsenartigen Elastomerführung 19 umgeben, um welche koaxial ein als Ring ausgebildetes Elastomerelement 17 angeordnet ist. In der nach radial außen gewandten Richtung wird das Elastomerelement 17 vom Dämpferrohr 4 eingefasst. Das als Dämpferrohr 4 ausgebildete Gehäuse 5 und die Elastomerführung 19 bilden gemeinsam eine Zwangsführung 18, welche mit ihren dem Elastomerelement 17 zugewandten Abschnitten eine radiale Verformung des Elastomerelements 17 begrenzt. Die Elastomerführung 19 schränkt dabei eine Verformung nach radial innen ein, wohingegen das Gehäuse 5 eine Verformung nach radial außen begrenzt. Das Elastomerelement 17 liegt außerdem mit seiner der Stirnseite 26 des Körpers 3 abgewandten Bodenseite 29 an einem quer zur Dämpfungsrichtung 7 verlaufenden Abschnitt 27 der Elastomerführung 19 an. Die Elastomerführung 19 verhindert also ein axiales Ausweichen des Elastomerelements 17.

Als Material für das Elastomerelement 17 findet beispielsweise Gummi, gemischtzelliges Polyurethan oder ein viskoelastischer PUR-Werkstoff mit hoher Dämpfung Verwendung. Aus diesen Dämpfungsplatten können die beschriebenen, insbesondere zylindrischen oder ringförmigen Elastomerelemente, in einfacher Weise ausgestanzt, ausgesägt, ausgeschnitten oder ausgebohrt werden

Der Körper 3 ist als Hohlkolben ausgebildet und weist längs der Dämpfungsrichtung 7 eine axiale Öffnung 22 auf, welche die Schraubenfeder 13, die koaxial angeordnete Führung 11, sowie die Elastomerführung 19 abschnittsweise umgibt. Die Schraubenfeder 13 stützt sich im Körper 3 entgegen der Dämpfungsrichtung 7 an der Stirnseite 24 der Öffnung 22 ab. Die Elastomerführung 19 erstreckt sich entgegen der Dämpfungsrichtung 7 über das Elastomerelement 17 hinaus und führt den Körper 3 im Inneren seiner Öffnung 22. Die Führung 11 erstreckt sich entgegen der Dämpfungsrichtung 7 über die Schraubenfeder 13 hinaus und führt den Körper 3. Dazu wird die stangenartige Führung 11 in einer Fortsetzung 23 der Öffnung 22 mit entsprechend geringerem Durchmesser geführt.

Auf einen Kraftstoß in Dämpfungsrichtung 7 hin wird der Körper 3 ausgehend von der in Figur 1 dargestellten Anfangslage in die Dämpfungsrichtung 7 bewegt. Dadurch wird zunächst die Schraubenfeder 13 in Dämpfungsrichtung 7 zusammengedrückt. Der Abstand des Elastomerelements 17 von der Kolbenstirnseite 26 bestimmt dabei einen ersten Weg 30. Die auf den Körper 3 übertragene Bewegungsenergie wird über den linearen oder progressiven Kraft-Wegzusammenhang der Schraubenfeder 13 entlang des Weges 30 zumindest teilweise aufgenommen. Bei weiterer Bewegung entlang der Dämpfungsrichtung 7 über den Weg 30 hinaus trifft die Kolbenstirnseite 26 auf das Elastomerelement 17. Das Elastomerelement 17 wird bei weiterer Bewegung in Dämpfungsrichtung 7 über einen zweiten Weg verformt. Die Stirnseite 25 des Elastomerelements 17 ist der Kolbenstirnseite 26 gleichgebildet und liegt dieser in Dämpfungsrichtung 7 gegenüber. Bei der Verformung über den zweiten Weg wird daher die gesamte, dem Körper 3 zugewandte Stirnseite 25 des Elastomerelements 17 mit Kraft beaufschlagt und die Kraft wird gleichmäßig über die Stirnseite 25 verteilt. Über den zweiten Weg wird das Elastomerelement 17 in Dämpfungsrichtung 7 zusammengedrückt, wobei insbesondere das in Gaseinschlüssen des Elastomer-Werkstoffs enthaltene Gas komprimiert wird. Eine Verformung in radialer Richtung hingegen ist durch die aus Elastomerführung 19 und Gehäuse 5 gebildete Zwangsführung 18 eingeschränkt. Für die weitere Bewegung in Dämpfungsrichtung 7 über den Weg 30 hinaus ergibt sich damit ein nichtlinearer, progressiver Kraft-Wegzusammenhang, was einen Abbau der verbleibenden Bewegungsenergie über eine vergleichsweise kurze Wegstrecke erlaubt. Damit können auch hohe Bewegungsenergien absorbiert werden, ohne dass das Elastomerelement durch seitliches Ausbauchen oder Ausknicken geschädigt wird. Außerdem erlaubt die beschriebene Vorrichtung auch ausgehend von einer im Vergleich zur in Figur 1 dargestellten Anfangslage in Dämpfungsrichtung 7 teilweise eingedrückten Position einen effektiven Dämpfungsvorgang.

Bei dem Dämpfungssystem 2 ist das Elastomerelement 17 wie beschrieben unbeweglich in der vom Gehäuse 5 und der Elastomerführung 19 gebildeten Zwangsführung 18 angeordnet. Es ist andererseits denkbar, dass das Elastomerelement 17 mit seiner Stirnseite 25 fest an der zugeordneten Kolbenstirnseite 26 des Körpers 3 angeordnet ist und bei Bewegung der Körpers 3 in der Zwangsführung 18 verschoben wird. Bei dieser Ausführungsform wird das Elastomerelement 17 verformt, sobald die Bodenseite 29 des Elastomerelements 17 am Abschnitt 27 der Elastomerführung 19 anliegt.

Die Figur 2 zeigt ein Dämpfungssystem 50, wobei dem Dämpfungssystem 2 gemäß Figur 1 entsprechende Bauteile mit entsprechenden Bezugszeichen versehen sind. Das Elastomerelement 17 ist als zylinderförmiges Vollelement ausgebildet und wird von der Elastomerführung 19 umschlossen, welche hier alleine die radiale Zwangsführung 18 bildet. Die Elastomerführung 19 sieht hierzu einen zylindrischen Aufnahmeraum 52 für das Elastomerelement 17 vor. Die Bodenseite 29 des Elastomerelements 17 liegt direkt am Gehäuse 5 an. Die Elastomerführung 19 ist einstückig mit der Führung 11 verbunden, um welche eine Schraubenfeder 13 angeordnet ist. Der Körper 3 wird koaxial im Innern der Führung 11 längs der Dämpfungsrichtung 7 geführt. Während des zweiten Weges wirkt der Körper 3 mit seiner Kolbenstirnseite 26 auf eine formstabile Druckplatte 28, welche am Elastomerelement 17 über dessen gesamte Stirnseite 25 anliegt. Bei der Verformung über den zweiten Weg wird daher die gesamte, dem Körper 3 zugewandte Stirnseite 25 des Elastomerelements 17 mit Kraft beaufschlagt und die Kraft wird gleichmäßig über die Stirnseite 25 verteilt.

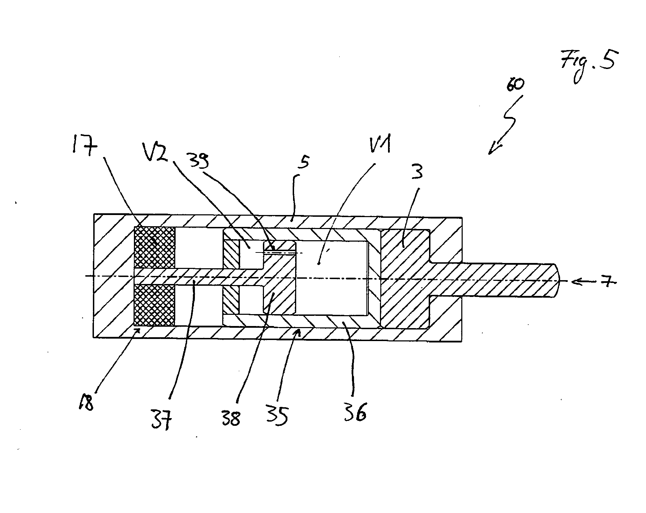

Das Gehäuse 5 des in Figur 2 dargestellten Dämpfungssystems 50 weist einen zahnstangenartigen Abschnitt 86 auf und findet beispielsweise in einem Dämpfungssystem 80 gemäß Figur 5 Verwendung. Dort bildet ein solches Gehäuse 5 (vgl. Fig. 2) eine Führungshülse 84 (vgl. Fig. 5), welche als Ganzes wiederum in einem Gehäuse 5 (vgl. Fig. 5) verschiebbar ist und dort den abzubremsenden Körper 3 bildet.

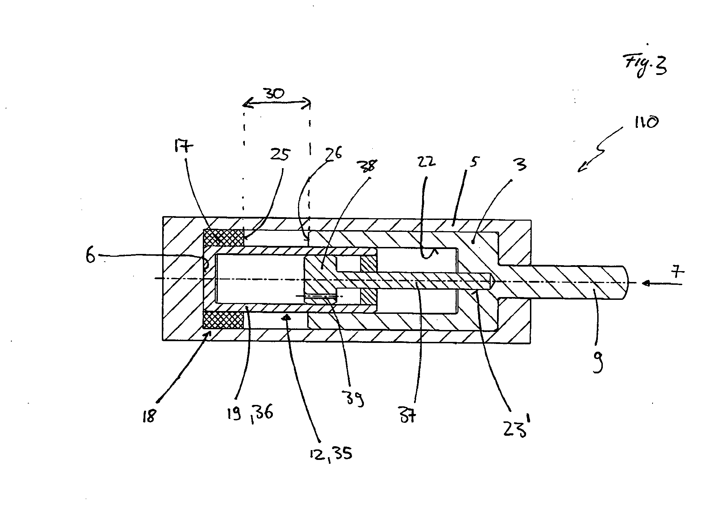

Die Figur 3 zeigt ein erfindungsgemäßes Dämpfungssystem 110, wobei die dargestellten Bauteile zur besseren Übersichtlichkeit mit identischen Bezugszeichen wie in den übrigen Figuren versehen sind. Ähnlich wie die Vorrichtungen gemäß den Figuren 1 und 2 umfasst das Dämpfungssystem 110 einen Körper 3, welcher in einem Gehäuse 5 entlang einer Dämpfungsrichtung 7 verschiebbar geführt ist. Der Körper 3 ist hohlkolbenartig mit einer axialen Öffnung 22 ausgebildet, welche entgegen der Dämpfungsrichtung 7 als radial verjüngte Ausnehmung 23' fortgesetzt ist.

Bei dem Dämpfungssystem 110 ist das Stoßelement 12 als hydraulischer Dämpfer 35 ausgebildet, welcher ein Dämpfergrundteil 36 sowie eine in dem Dämpfergrundteil 36 längs der Dämpfungsrichtung 7 federnd und dämpfend gelagerte Dämpferstange 37 aufweist. Zur dämpfenden Lagerung ist der gegen Flüssigkeitsaustritt abgedichtete Innenraum des Dämpfergrundteils 36 mit einem Dämpfungsmedium, beispielsweise Hydrauliköl, angefüllt. Die Dämpferstange 37 ist mit einem Stößelabschnitt 38 in dem mit dem Dämpfungsmedium angefüllten Innenraum des Dämpfergrundteils 36 axial geführt. Bei Verschiebung der Dämpferstange 37 wird das Dämpfungsmedium in Richtung der Verschiebung verdängt und zum Ausgleich durch eine Mediendurchführung 39 des Stößelabschnitts 38 gedrückt.

Der hydraulische Dämpfer 35 liegt mit seinem Dämpfergrundteil 36 an der Bodenseite 6 des Gehäuses 5 an. An dem gegenüberliegenden Ende greift das Dämpfergrundteil 36 in die axiale Öffnung 22 des hohlkolbenartig ausgebildeten Körpers 3 ein. Dadurch wird der Körper 3 zusätzlich axial geführt und ein Verkanten der beweglichen Teile gegeneinander vermieden.

Die Dämpferstange 37 greift in die radial verjüngte Ausnehmung 23' ein und ist dort fixiert, beispielsweise verschraubt. Dadurch kann die Dämpferstange 37 mit dem Körper 3 in und entgegen der Dämpfungsrichtung 7 verschoben werden.

Wie in der Figur 3 erkennbar, wird zwischen dem Dämpfergrundteil 36 und dem Gehäuse 5 ein Ringspalt gebildet, von welchem eine Zwangsführung 18 für ein ringförmiges Elastomerelement 17 bereitgestellt wird. Dabei schränkt das Dämpfergrundteil 36 das Elastomerelement 17 gegen eine Verformung nach radial innen ein und bildet somit die Elastomerführung 19 (vergleiche Figur 1). Nach radial außen wird das Elastomerelement durch das Gehäuse 5 gegen Verformung eingeschränkt. Ein zusätzliches Bauteil für die Elastomerführung 19 wird somit nicht benötigt. Ebenso kann bei Verwendung eines hydraulischen Dämpfers 35 als Stoßelement 12 die zu den Figuren 1 und 2 erläuterte Führung 11 für die dort eingesetzte Schraubenfeder 13 eingespart werden.

Wird der Körper 3 ausgehend von der in der Figur 3 dargestellten Anfangslage in Dämpfungsrichtung 7 bewegt, so wird zunächst über einen ersten Federweg 30 ausschließlich eine Dämpfung durch den hydraulischen Dämpfer 35 bereitgestellt, wobei der Stößelabschnitt 38 in dem Dämpfergrundteil 36 in Dämpfungsrichtung 7 verschoben wird. Wie schon zu den Figuren 1 und 2 erläutert, wird die Größe des ersten Federwegs 30 durch den anfänglichen Abstand der Kolbenstirnseite 26 zur Stirnseite 25 des Elastomerelements 17 bestimmt. Bei einer weiteren Bewegung des Körpers 3 über den ersten Federweg 30 hinaus wird dann, wie bereits zu Figur 1 erläutert, das Elastomerelement 17 in Dämpfungsrichtung 7 zusammengedrückt. Dabei ist eine Verformung des Elastomerelements 17 in radialer Richtung, wie erläutert, durch die vom Dämpfergrundteil 36 und dem Gehäuse 5 gebildete Zwangsführung 18 eingeschränkt.

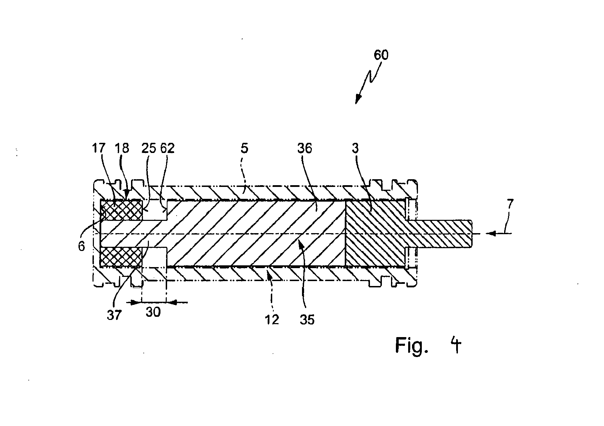

Auch bei dem in Figur 4 dargestellten Dämpfungssystem 60 sind die dargestellten Bauteile mit identischen Bezugszeichen wie in den übrigen Figuren versehen. Das Stoßelement 12 wird hier von einem hydraulischen Dämpfer 35 gebildet, der in Figur 4 nur schematisch dargestellt ist und zu Figur 5 genauer beschrieben ist. Der Dämpfer 35 sieht wiederum ein Dämpfergrundteil 36 und eine längs der Dämpfungsrichtung 7 federnd und dämpfend gelagerte Dämpferstange 37 vor. Die Dämpferstange 37 liegt an der Grundseite 6 des Gehäuses 5 an oder ist dort mit dem Gehäuse 5 fest verbunden. Das Dämpfergrundteil 36 ist im Gehäuse 5 längs der Dämpfungsrichtung 7 bewegbar. Um die Dämpferstange 37 ist koaxial ein als Ring ausgebildetes Elastomerelement 17 angeordnet. Die Dämpferstange 37 und das Gehäuse 5 bilden gemeinsam die Zwangsführung 18, wobei eine Verformung des Elastomerelements 17 nach radial innen durch die Dämpferstange 37, nach radial außen durch das Gehäuse 5 eingeschränkt wird. Bei Bewegung des Körpers 3 in Dämpfungsrichtung 7 wird das Dämpfergrundteil 36 ebenfalls in Dämpfungsrichtung bewegt. Nach dem ersten Weg 30 trifft die Stirnseite 62 des Dämpfergrundteils 36 auf die Stirnseite 25 des Elastomerelements 17. Bei weiterer Bewegung in Dämpfungsrichtung 7 wird das Elastomerelement 17 über den zweiten Weg verformt, wobei es durch die Zwangsführung 18 radial eingeschränkt wird. Der Dämpfer 35 ist vorteilhafterweise so verbaut, dass nur der erste Teil des möglichen Dämpferhubes in Dämpfungsrichtung 7 im Betrieb des Dämpfungssystems 60 genutzt wird. Alternativ ist auch eine hydraulische Feder oder eine Druckluftfeder als Stoßelement 12 denkbar.

Zur genaueren Erläuterung des hydraulischen Dämpfers 35 ist in der Figur 5 das Dämpfungssystem 60 aus Figur 4 in einer schematischen Detaildarstellung gezeigt, bei welcher der hydraulische Dämpfer 35 im Längsschnitt zu erkennen ist. Zur besseren Übersichtlichkeit werden für die sichtbaren Bauteile dieselben Bezugszeichen wie in den übrigen Figuren verwendet.

Wie vorstehend erläutert, ist das Dämpfergrundteil 36 durch Bewegung des Körpers 3 entlang der Dämpfungsrichtung 7 verschiebbar. Die Dämpferstange 37 ist mit einem radial erweiterten Stößelabschnitt 38 im Innenraum des Dämpfergrundteils 36 geführt. Der Innenraum des Dämpfergrundteils 36 ist weitgehend flüssigkeitsdicht ausgebildet und mit einem Dämpfungsmedium, beispielsweise Hydrauliköl, angefüllt. Der Stößelabschnitt 38 unterteilt den Innenraum des Dämpfergrundteils 36 in ein Teilvolumen V1 und ein Teilvolumen V2, wie in Figur 5 dargestellt. Die Größe der Teilvolumina V1 und V2 hängt davon ab, wie weit das Dämpfergrundteil 36 in Dämpfungsrichtung 7 verschoben ist. Zwischen den Teilvolumina V1 und V2 kann durch eine Mediendurchführung 39 des Stößelabschnitts 38 ein Austausch von Dämpfungsmedium erfolgen.

Wird beispielsweise das Dämpfergrundteil 36 ausgehend von der in der Figur 5 dargestellte Lage in Dämpfungsrichtung 7 verschoben, so wird das Teilvolumen V1 verkleinert und Dämpfungsmedium durch die Mediendurchführung 39 aus dem Teilvolumen V1 in das Teilvolumen V2 verdrängt. Dadurch wird eine Dämpfungswirkung bereitgestellt. Neben der hier beschriebenen Ausführungsform des hydraulischen Dämpfers 35 kann auch ein anderes bekanntes Funktionsprinzip zum Einsatz kommen. Insbesondere kann der hydraulische Dämpfer 35 als handelsüblicher Industriestoßdämpfer ausgebildet sein.

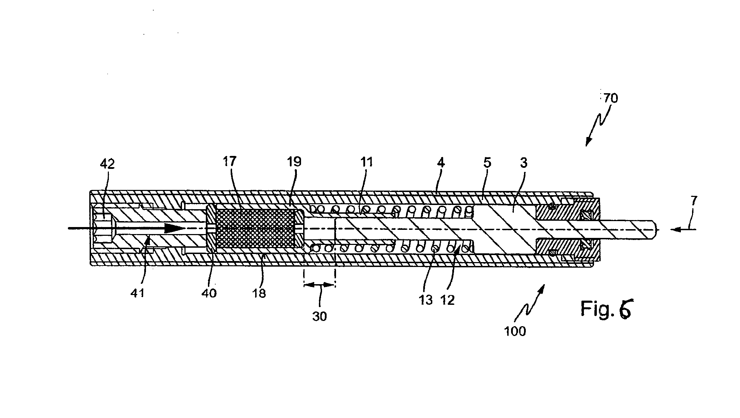

Figur 6 zeigt zur weiteren Erläuterung des Erfindungsgedankens einen Stoßdämpfer 100, in dem ein Dämpfungssystem 70 angeordnet ist, wobei auch hier die dargestellten Bauteile mit den selben Bezugszeichen wie in den übrigen Figuren versehen sind.

Der Aufbau des Dämpfungssystem 70 entspricht im Wesentlichen dem Dämpfungssystem 50 gemäß Figur 2 mit einer Schraubenfeder 13 als Stoßelement 12, wobei auch eines der in den übrigen Figuren dargestellten Stoßelemente eingesetzt werden kann. Zusätzlich sind bei dem Stoßdämpfer 100 Einstellmittel 41 in Form einer Stellschraube 42 zur Veränderung der Position des Elastomerelements 17 längs der Dämpfungsrichtung 7 vorgesehen sind. Durch Verdrehen der Stellschraube 42 wird die Elastomerführung 19 und das darin angeordnete Elastomerelement 17 längs der Dämpfungsrichtung 7 verschoben. Dadurch wird der erste Weg 30 in gewissem Maße einstellbar. In Figur 6 wird durch Verdrehen der Stellschraube 42 außerdem die axiale Position der Führung 11 verändert. Daher kann mit den Einstellmitteln 41 auch die Vorspannung des Stoßelements 12 in der Anfangslage variiert werden. Bei der Ausführungsform gemäß Figur 6 ist die Führung 11 in einem Stück mit der Elastomerführung 19 ausgebildet und gemeinsam mit dem Elastomerelement 17 auf einem Sockel 40 angeordnet. Mit der Stellschraube 42 ist die Position des Sockels 40 entlang der Dämpfungsrichtung 7 einstellbar. Dadurch wird die vorstehend beschriebene Veränderung des ersten Weges 30 und der Vorspannung des Stoßelements 12 in der Anfangslage ermöglicht. Dies erlaubt eine Anpassung des resultierenden Kraft-Weggesetzes des Stoßdämpfers 100 an die zu dämpfende Bewegungsenergie.

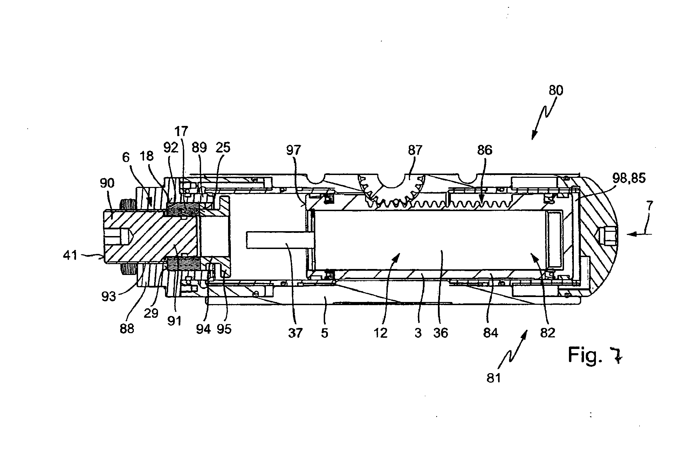

Die Figur 7 zeigt ein Dämpfungssystem 80, wie es insbesondere zur Anschlagsdämpfung in einer Schwenkeinheit 81 zum Einsatz kommen kann. Dabei sind die sichtbaren Bauteile mit entsprechenden Bezugszeichen wie in den übrigen Figuren versehen. Bei dem Dämpfungssystem 80 ist das Stoßelement 12 als Stoßdämpfer 82 ausgebildet und weist ein Dämpfergrundteil 36 und eine das Dämpfergrundteil 36 überragende Dämpferstange 37 auf. Der Stoßdämpfer 82 ist in einer kolbenartig ausgebildeten Führungshülse 84 angeordnet, die im Gehäuse 5 des Dämpfungssystems 80 längs der Dämpfungsrichtung 7 geführt wird. Dabei überragt die Dämpferstange 37 die Führungshülse 84 in Dämpfungsrichtung 7. Zum Bewegen der Führungshülse 84 umfasst die Schwenkeinheit 81 eine Antriebsvorrichtung 85. Dazu ist hier ein Druckraum 98 vorgesehen, wobei die Bewegung beispielsweise durch Beaufschlagung des Druckraumes 98 mit Druckluft eingeleitet wird. Die Führungshülse 84 weist einen zahnstangenartigen Abschnitt 86 auf, der zur Erzeugung einer Drehbewegung ein in Figur 7 nur angedeutetes Zahnrad 87 kämmt. Insofern stellt die Führungshülse 84 den Körper 3 dar, dessen Bewegung vor Erreichen seiner Endlage gedämpft bzw. abgebremst wird. Die Bodenseite 6 des Gehäuses 5 wird von einem Bodenteil 88 gebildet, in das ein Anschlagbolzen 90 mit einem Außengewinde 93 eingeschraubt ist. Der Anschlagbolzen 90 erstreckt sich entgegen der Dämpfungsrichtung 7 und weist einen radial zurückgesetzten Abschnitt 91 auf. Das Bodenteil 88 weist einen Abschnitt 89 auf, der sich radial beabstandet ringartig um dem Anschlagbolzen 90 erstreckt. Am Bodenteil 88 ist dabei eine Anlageschulter 92 vorgesehen. Um den Abschnitt 91 ist ein ringförmiges Elastomerelement 17 derart koaxial angeordnet, dass es nach radial innen vollumfänglich am Abschnitt 91, nach radial außen am Abschnitt 89 anliegt. Der Anschlagbolzen 90 und das Bodenteil 88 bilden also gemeinsam die Zwangsführung 18. Die Bodenseite 29 des Elastomerelements 17 liegt an der Anlageschulter 92 an. Anliegend an der Stirnseite 25 des Elastomerelements 17 ist eine Anschlagshülse 94 angeordnet, deren der Führungshülse 84 zugewandte Abschnitt von einem ringbundartigen Abschlagring 95 gebildet wird. Ausgehend von der in Figur 7 dargestellten Anfangslage kann die Führungshülse 84 zunächst durch Beaufschlagung des Druckraumes 98 frei in Dämpfungsrichtung 7 bewegt werden, bis die Dämpferstange 37 am Anschlagbolzen 90 anliegt. Bei weiterer Bewegung in Dämpfungsrichtung 7 wird zunächst über einen ersten Weg der Stoßdämpfer 82 beaufschlagt. Die Führungshülse 84 weist eine Stirnseite 97 auf, die bei weiterer Bewegung über den ersten Weg hinaus auf den Anschlagring 95 trifft. Wird daraufhin die Führungshülse 84 weiter in Dämpfungsrichtung 7 bewegt, so wird die gesamte Stirnseite 25 des Elastomerelements 17 über die Anschlaghülse 94 gleichmäßig mit Kraft beaufschlagt. Das Elastomerelement 17 kann über den zweiten Weg solange verformt werden, bis der Anschlagring 95 am Bodenteil 88 anliegt und somit die Endlage erreicht ist. Die Position des Anschlagbolzens 90 entlang der Dämpfungsrichtung 7 ist aufgrund des Außengewindes 93 des Anschlagbolzens 90 in gewissem Maße verstellbar. Insofern bilden der Anschlagbolzen 90 mit dem Außengewinde 93 die Einstellmittel 41 zur Veränderung des ersten Weges, über den bei Bewegung der Führungshülse 84 in Dämpfungsrichtung 7 der Stoßdämpfer 36 beaufschlagt wird, bevor bei weiterer Bewegung das Elastomerelement 17 verformt wird.

## Patentansprüche

1. Dämpfungssystem zur Anschlagsdämpfung (2,50,60,70,80) mit einem längs einer Dämpfungsrichtung (7) bewegbaren Körper (3), dessen Bewegung vor Erreichen einer Endlage abgebremst wird, mit einem Stoßelement (12), das als hydraulischer Dämpfer (35) mit einem Dämpfergrundteil (36) und mit einer in dem Dämpfergrundteil (36) längs der Dämpfungsrichtung (7) federnd und dämpfend gelagerten Dämpferstange (37) ausgebildet ist, und mit einem Elastomerelement (17), **dadurch gekennzeichnet,**
**dass** der Körper (3), der hydraulischer Dämpfer (35) und das Elastomerelement (17) in einem Gehäuse (5) angeordnet sind und der Körper (3) entlang der Dämpfungsrichtung (7) im Gehäuse (5) geführt wird,
**dass** durch Bewegen des Körpers (3) aus seiner Anfangslage in Dämpfungsrichtung (7) über einen ersten Weg (30) zunächst der hydraulischer Dämpfer (35) beaufschlagt und durch weiteres Bewegen über einen zweiten Weg das Elastomerelement (17) verformt wird, wobei der hydraulische Dämpfer (35) und das Elastomerelement (17) wegabhängig funktional parallel geschaltet sind, so dass nach der Wirkung des hydraulischen Dämpfers (35) das Elastomerelement (17) verformt wird, und
**dass** eine formkonstante Zwangsführung (18) vorgesehen ist, die entweder
- vom Dämpfergrundteil (36) des hydraulischen Dämpfers (35) und vom Gehäuse (5), oder
- von der Dämpferstange (37) des hydraulischen Dämpfers (35) und vom Gehäuse (5)
gebildet wird, in welcher das Elastomerelement (17), das als Ringelement ausgebildet ist, derart angeordnet ist, dass eine Verformung des Elastomerelements (17) in radialer Richtung während des zweiten Weges zumindest abschnittsweise unterbunden wird.

2. Dämpfungssystem (2,50,60,70,80) nach Anspruch 1, **dadurch gekennzeichnet, dass** das Elastomerelement (17) aus einem Elastomer-Werkstoff mit Gaseinschlüssen, insbesondere einem microcellularen Elastomer oder einem Elastomer-Schaum gebildet ist.

3. Dämpfungssystem nach Anspruch 1 oder 2, **dadurch gekennzeichnet, dass** das Elastomerelement (17) in der Zwangsführung (18) derart angeordnet ist, dass es in der Anfangslage von den die Verformung in radialer Richtung unterbindenden Abschnitten der Zwangsführung (18) beabstandet ist.

4. Dämpfungssystem (2,50,60,70,80) nach Anspruch 1 oder 2, **dadurch gekennzeichnet, dass** das Elastomerelement (17) in der Zwangsführung (18) derart angeordnet ist, dass es in der Anfangslage an den die Verformung in radialer Richtung unterbindenden Abschnitten der Zwangsführung (18) zumindest abschnittsweise anliegt.

5. Dämpfungssystem (2,50,60,70,80) nach einem der vorherigen Ansprüche, **dadurch gekennzeichnet, dass** das Elastomerelement (17) derart angeordnet ist, dass bei seiner Verformung die gesamte, dem Körper (3) zugewandte Stirnseite (25) des Elastomerelements (17) mit Kraft beaufschlagt wird.

6. Dämpfungssystem (2,50,60,70,80) nach Anspruch 1, 2, 4 oder 5, **dadurch gekennzeichnet, dass** das Elastomerelement (17) derart in der Zwangsführung (18) angeordnet ist, dass es in radialer Richtung und an der dem Körper (3) abgewandten axialen Stirnseite (25) vollumfänglich an der Zwangsführung (18) anliegt.

7. Dämpfungssystem (2,50,70) nach einem der vorherigen Ansprüche, **dadurch gekennzeichnet, dass** die Zwangsführung (18) sich derart längs der Dämpfungsrichtung (7) erstreckt, dass der Körper (3) bei Bewegung längs der Dämpfungsrichtung (7) durch die Zwangsführung (18) geführt wird.

8. Dämpfungssystem (2,50,70) nach einem der vorherigen Ansprüche, **dadurch gekennzeichnet, dass** für den hydraulischen Dämpfer (35) eine Führung (11) längs der Dämpfungsrichtung (7) vorgesehen ist und dass der Körper (3) bei Bewegung längs der Dämpfungsrichtung (7) durch die Führung (11) geführt wird.

9. Dämpfungssystem (2,50,60,70,80) nach einem der vorherigen Ansprüche, **dadurch gekennzeichnet, dass** das Stoßelement eine Schraubenfeder (13) und/oder eine hydraulische Feder und/oder eine Druckluftfeder umfasst.

10. Dämpfungssystem (2,50,60,70,80) nach einem der vorherigen Ansprüche, **dadurch gekennzeichnet, dass** das Elastomerelement (17) als ein zylindrisches Vollelement oder als.

11. Dämpfungssystem (2) nach einem der vorherigen Ansprüche, **dadurch gekennzeichnet, dass** der Körper (3) eine axiale Öffnung (22) längs der Dämpfungsrichtung (7) aufweist, in welcher der hydraulische Dämpfer (35) koaxial angeordnet ist und sich in der Öffnung (22) im Körper (3) in Dämpfungsrichtung (7) abstützt.

12. Dämpfungssystem (50,70) nach Anspruch 11, **dadurch gekennzeichnet, dass** die axiale Öffnung (22) entgegen der Dämpfungsrichtung (7) als radial verjüngte Ausnehmung (23') fortgesetzt ist, wobei die Dämpferstange (37) in die radial verjüngte Ausnehmung (23') eingreift und dort fixiert ist.

13. Dämpfungssystem (70,80) nach einem der vorherigen Ansprüche, **dadurch gekennzeichnet, dass** Einstellmittel (41) in Form einer Stellschraube (42) zur Veränderung der Position des Elastomerelements (17) entlang der Dämpfungsrichtung (7), derart vorgesehen sind, dass der erste Weg (30) bei Bewegung des Körpers (3) in Dämpfungsrichtung (7) einstellbar ist.

14. Dämpfungssystem (60) nach einem der vorherigen Ansprüche, **dadurch gekennzeichnet, dass** die Zwangsführung (18) für das Elastomerelement (17) wenigstens teilweise durch das Gehäuse (5) gebildet wird.

15. Schwenkeinheit (81) umfassend ein Dämpfungssystem (80) nach einem der vorhergehenden Ansprüche und eine aktiv ansteuerbare Antriebsvorrichtung (85) zum Bewegen des Körpers (3) längs der Dämpfungsrichtung (7).

## Claims

1. A damping system for impact damping (2, 50, 60, 70, 80), having a body (3) movable in a damping direction (7) whose motion is braked before a terminal position is reached, having an impact element (12) which is embodied as a hydraulic damper (35) with a fundamental damper part (36) and with a damper rod (37) supported in the fundamental damper part (36) in resilient and damping fashion in the damping direction (7), and having an elastomer element (17), **characterized in that**
the body (3), the hydraulic damper (35) and the elastomer element (17) are disposed in a housing (5) and the body (3) is guided in the housing (5) in the damping direction (7);
that by motion of the body (3) out of its outset position by a first distance (30) in the damping direction (7), first the hydraulic damper (35) is acted upon, and by further motion by a second distance, the elastomer element (17) is deformed, and the hydraulic damper (35) and the elastomer element (17) are connected functionally parallel as a function of distance such that in accordance with the action of the hydraulic damper (35), the elastomer element (17) is deformed; and
that a forced-guidance means (18) of constant shape is provided, which is formed either
- by the fundamental damper part (36) of the hydraulic damper (35) and by the housing (5), or
- by the damper rod (37) of the hydraulic damper (35) and by the housing (5),
in which force guide means the elastomer element (17), which is embodied as an annular element, is disposed in such a manner that a deformation of the elastomer element (17) in the radial direction while the second distance is being traversed is prevented, at least intermittently.

2. The damping system (2, 50, 60, 70, 80) of claim 1, **characterized in that** the elastomer element (17) is formed from an elastomer material with gas inclusions, in particular a microcellular elastomer or an elastomer foam.

3. The damping system of claim 1 or 2, **characterized in that** the elastomer element (17) is disposed in the forced-guidance means (18) in such a manner that in the outset position, it is spaced apart from the portions of the forced-guidance means (18) that prevent the deformation in the radial direction.

4. The damping system (2, 50, 60, 70, 80) of claim 1 or 2, **characterized in that** the elastomer element (17) is disposed in the forced-guidance means (18) in such a manner that in the outset position, it rests at least intermittently on the portions of the forced-guidance means (18) that prevent the deformation in the radial direction.

5. The damping system (2, 50, 60, 70, 80) of one of the foregoing claims, **characterized in that** the elastomer element (17) is disposed in such a manner that upon its deformation, the entire face end (25) of the elastomer element (17) facing toward the body (3) is acted upon to force.

6. The damping system (2, 50, 60, 70, 80) of claim 1, 2, 4 or 5, **characterized in that** the elastomer element (17) is disposed in the forced-guidance means (18) in such a manner that it rests with its full circumference on the forced-guidance means (18) in the radial direction and on the axial face end (25) facing away from the body (3).

7. The damping system (2, 50, 70) of one of the foregoing claims, **characterized in that** the forced-guidance means (18) extends in the damping direction (7) in such a manner that the body (3), upon motion in the damping direction (7), is guided by the forced-guidance means (18).

8. The damping system (2, 50, 70) of one of the foregoing claims, **characterized in that** for the hydraulic damper (35), a guide (11) in the damping direction (7) is provided; and that the body (3), upon motion in the damping direction (7), is guided by the guide (11a).

9. The damping system (2, 50, 60, 70, 80) of one of the foregoing claims, **characterized in that** the impact element includes a helical spring (13) and/or a hydraulic spring and/or a compressed-air spring.

10. The damping system (2, 50, 60, 70, 80) of one of the foregoing claims, **characterized in that** the elastomer element (17) is embodied as a solid cylindrical element or as.

11. The damping system (2) of one of the foregoing claims, **characterized in that** the body (3) has an axial opening (22) in the damping direction (7), in which the hydraulic damper (35) is coaxially disposed and is braced in the opening (22) in the body (3) in the damping direction (7).

12. The damping system (50, 70) of claim 11, **characterized in that** the axial opening (22) is continued, oppositely from the damping direction (7), as a radially tapered recess (23'), and the damper rod (37) engages the radially tapered recess (23') and is fixed therein.

13. The damping system (70, 80) of one of the foregoing claims, **characterized in that** adjusting means (41) in the form of a set screw (42) are provided for changing the position of the elastomer element (17) in the damping direction (7) in such a manner that the first distance (30) upon motion of the body (3) in the damping direction (7) is adjustable.

14. The damping system (60) of one of the foregoing claims, **characterized in that** the forced-guidance means (18) for the elastomer element (17) is formed at least partially by the housing (5).

15. A swiveling unit (18) including both a damping system (80) of one of the foregoing claims and an actively triggerable drive device (85) for moving the body (3) in the damping direction (7).

## Revendications

1. Système d'amortissement pour un amortissement de butée (2, 50, 60, 70, 80) comprenant un corps (3) mobile le long d'une direction d'amortissement (7), le mouvement de ce corps étant ralenti avant d'atteindre une position de fin de course, comprenant un élément de poussée (12) réalisé sous la forme d'un amortisseur hydraulique (35) avec une partie de base d'amortisseur (36) et une tige d'amortisseur (37) montée de façon élastique et amortissante dans la partie de base d'amortisseur (36) le long de la direction d'amortissement (7), et comprenant un élément élastomère (17), **caractérisé en ce que** le corps (3), l'amortisseur hydraulique (35) et l'élément élastomère (17) sont agencés dans un boîtier (5), **en ce que** le corps (3) est guidé dans le boîtier (5) le long de la direction d'amortissement (7), **en ce que**, lorsque l'on déplace le corps (3) depuis sa position initiale dans la direction d'amortissement (7) sur une première distance (30), on sollicite d'abord l'amortisseur hydraulique (35) et lorsque l'on poursuit le déplacement sur une deuxième distance, l'élément élastomère (17) se déforme, l'amortisseur hydraulique (35) et l'élément élastomère (17) étant montés parallèlement d'un point de vue fonctionnel de façon asservie à la course de sorte que, après effet de l'amortisseur hydraulique (35), l'élément élastomère (17) se déforme, et
**en ce qu'**il est prévu un guidage forcé (18) de forme constante, lequel est formé soit
- par la partie de base d'amortisseur (36) de l'amortisseur hydraulique (35) et par le boîtier (5), soit
- par la tige d'amortisseur (37) de l'amortisseur hydraulique (35) et par le boîtier (5), dans lequel l'élément élastomère (17), lequel est réalisé sous la forme d'un élément annulaire, est agencé de telle façon qu'une déformation de l'élément élastomère (17) dans le sens radial est empêchée au moins par endroits pendant le deuxième trajet.

2. Système d'amortissement (2, 50, 60, 70, 80) selon la revendication 1, **caractérisé en ce que** l'élément élastomère (17) est formé à partir d'une matière élastomère avec des inclusions gazeuses, en particulier un élastomère microcellulaire ou une mousse élastomère.

3. Système d'amortissement selon la revendication 1 ou 2, **caractérisé en ce que** l'élément élastomère (17) est agencé de telle façon dans le guidage forcé (18) que, dans la position initiale, il est à distance des sections du guidage forcé (18) empêchant la déformation dans le sens radial.

4. Système d'amortissement (2, 50, 60, 70, 80) selon la revendication 1 ou 2, **caractérisé en ce que** l'élément élastomère (17) est agencé de telle façon dans le guidage forcé (18) qu'il repose, dans la position initiale, au moins par endroits sur les sections du guidage forcé (18) empêchant la déformation dans le sens radial.

5. Système d'amortissement (2, 50, 60, 70, 80) selon l'une des revendications précédentes, **caractérisé en ce que** l'élément élastomère (17) est agencé de telle façon que, lorsqu'il se déforme, toute la surface frontale (25) de l'élément élastomère (17) orientée vers le corps (3) est sollicitée par une force.

6. Système d'amortissement (2, 50, 60, 70, 80) selon la revendication 1, 2, 4 ou 5, **caractérisé en ce que** l'élément élastomère (17) est agencé de telle façon dans le guidage forcé (18) qu'il vient reposer complètement sur le guidage forcé (18) dans le sens radial et sur la face frontale (25) axiale orientée à l'opposé du corps (3).

7. Système d'amortissement (2, 50, 70) selon l'une des revendications précédentes, **caractérisé en ce que** le guidage forcé (18) s'étend le long de la direction d'amortissement (7) de telle façon que le corps (3), lorsqu'il est déplacé le long de la direction d'amortissement (7), est guidé par le guidage forcé (18).

8. Système d'amortissement (2, 50, 70) selon l'une des revendications précédentes, **caractérisé en ce qu'**il est prévu, pour l'amortisseur hydraulique (35), un guidage (11) le long de la direction d'amortissement (7) et **en ce que** le corps (3), lorsqu'il est déplacé le long de la direction d'amortissement (7), est guidé par le guidage (11).

9. Système d'amortissement (2, 50, 60, 70, 80) selon l'une des revendications précédentes, **caractérisé en ce que** l'organe de poussée comprend un ressort cylindrique (13) et/ou un ressort hydraulique et/ou un ressort pneumatique.

10. Système d'amortissement (2, 50, 60, 70, 80) selon l'une des revendications précédentes, **caractérisé en ce que** l'élément élastomère (17) est réalisé sous la forme d'un élément plein.

11. Système d'amortissement (2) selon l'une des revendications précédentes, **caractérisé en ce que** le corps (3) présente une ouverture axiale (22) le long de la direction d'amortissement (7), dans laquelle l'amortisseur hydraulique (35) est agencé de façon coaxiale et vient s'appuyer dans l'ouverture (22) dans le corps (3) dans la direction d'amortissement (7).

12. Système d'amortissement (50, 70) selon la revendication 11, **caractérisé en ce que** l'ouverture axiale (22) se poursuit à l'opposé de la direction d'amortissement (7) sous la forme d'un évidement effilé (23'), la tige d'amortisseur (37) venant s'engager dans l'évidement effilé radial (23') et s'y fixer.

13. Système d'amortissement (70, 80) selon l'une des revendications précédentes, **caractérisé en ce qu'**il est prévu des moyens de réglage (41) sous la forme d'une vis de réglage (42) pour modifier la position de l'élément élastomère (17) le long de la direction d'amortissement (7) de sorte que la première distance (30), lors du déplacement du corps (3), est réglable dans la direction d'amortissement (7).

14. Système d'amortissement (60) selon l'une des revendications précédentes, **caractérisé en ce que** le guidage forcé (18) pour l'élément élastomère (17) est réalisé au moins en partie par le boîtier (5).

15. Ensemble pivotant (81) comprenant un système d'amortissement (80) selon l'une des revendications précédentes ainsi qu'un dispositif d'entraînement à commande active (85) pour déplacer le corps (3) le long de la direction d'amortissement (7).
